# EUROPEAN PATENT SPECIFICATION

(11) **EP 2 079 120 B1**
(45) Date of publication and mention of the grant of the patent: **02.04.2014**
(21) Application number: 09150044.7
(22) Date of filing: 05.01.2009
(51) Int. Cl.: H01M 2/16, H01M 4/64, H01M 4/58, H01M 10/0525, H01M 4/38, H01M 4/48, H01M 4/131, H01M 4/134

(54) **Electrode assembly and lithium secondary battery having the same**
Elektrodenanordnung und Lithium-Sekundärbatterie damit
Ensemble d'électrode et batterie secondaire au lithium le contenant

(30) Priority: 08.01.2008 KR 20080002144
(43) Date of publication of application: 15.07.2009
(73) Proprietor: Samsung SDI Co., Ltd., Gyeonggi-do (KR)
(72) Inventor: Kim, Jin-Hee c/o Legal & IP Team Samsung SDI Co., Ltd., Gyeonggi-do (KR)
(74) Representative: Russell, Tim

(56) References cited:
- EP-A- 1 746 674
- EP-A- 1 826 842
- EP-A- 1 965 454
- WO-A-2006/067891
- WO-A-2007/094240
- US-A1- 2006 166 098
- US-A1- 2006 251 963
- US-A1- 2006 269 842
- US-A1- 2006 286 445
- US-A1- 2007 099 081
- US-A1- 2007 111 102
- US-A1- 2007 218 365
- US-A1- 2007 231 700
- US-A1- 2007 264 577

## Description

The present invention relates to an electrode assembly and a lithium secondary battery having the same.

Handheld electronic devices are becoming smaller and lighter, which has led to an increasing demand for compact, high-capacity batteries. Particularly, lithium secondary batteries are being rapidly developed, because lithium batteries have a high energy density per unit weight and an operating voltage of 3.6V, which is three times higher than that of a nickel-cadmium battery or a nickel-metal hydride battery.

A lithium secondary battery stores and releases electrical energy through the intercalation and deintercalation of lithium ions at positive and negative electrodes. A lithium secondary battery is manufactured by filling an organic or polymer electrolyte between positive and negative electrodes. The positive and negative electrodes include positive and negative electrode active materials that are capable of intercalating/deintercalating lithium ions.

A lithium secondary battery includes an electrode assembly including a negative electrode plate, a separator, and a positive electrode plate, which are sequentially stacked and wound in a jellyroll-type shape. The electrode assembly is disposed in a can with an electrolyte, and a cap assembly is used to seal the can.

Conventionally, lithium metal was used as a negative electrode active material. However, lithium metal tends to form dendrites, which may cause the battery to short circuit or explode. Accordingly, a carbonaceous material, such as amorphous carbon, or crystalline carbon, is generally used in place of the lithium metal.

EP1746674 discloses an electrode comprising an electrode current collector, an electrode active material layer formed on the electrode current collector, and a Si-containing material layer formed on at least one of the electrode current collector and the electrode active material layer.

A carbonaceous anode is porous, and thus, there is little change in the volume of the carbonaceous anode during charging and discharging. This results in high battery stability. However, a battery using a carbonaceous anode has a low battery capacity, because of the relatively high porosity of the carbonaceous anode. For example, graphite, which is a highly crystalline material, has a theoretical capacity density of about 372 mAh/g, when in the form of LiC₆. This density is only about 10% of that of metallic lithium, i.e., 3860 mAh/g.

To overcome these problems, there is active research on a lithium battery employing a metallic material, for example, aluminum, germanium, silicon, tin, zinc, or lead, as a negative electrode active material, because these materials have a higher capacity and energy density than a carbonaceous negative electrode active material. For example, pure silicon has a theoretical capacity of 4017 mAh/g.

Conventionally, a polyolefin-based, nonporous polymer layer, such as a polypropylene layer, a polyethylene layer, or multiple layers thereof, is used as a separator. However, such a polyolefin-based separator shrinks when pores therein are blocked, due to heat generated during rapid discharging/ charging. As a result, the separator shrinks, bringing portions of a positive electrode and a negative electrode in direct contact with each other, which may lead to a short, burning, breaking, or explosion.

When a conventional polyolefin-based separator is used in conjunction with a metallic negative active material, the shrinkage of the separator may be enhanced. That is, the metallic negative electrode active material generates large amounts of heat during charging and discharging, which further increases the shrinkage of the separator, as compared to when a carbonaceous negative electrode active material is used.

The metallic material included in the metallic negative electrode active material absorbs lithium during charging, and thus, the negative active material expands by approximately 300 to 400%. When the lithium is released during discharging, the negative active material shrinks by an equivalent amount. This volume change reduces the conductivity of the negative active material, and the negative electrode active material may become separated from a negative current collector, thereby decreasing the life span of the battery.

The present invention seeks to provide an electrode assembly that is resistant to short circuits, and has good capacity characteristics, and a lithium secondary battery having the same.

According to an aspect of the present invention, provided is an electrode assembly that includes: a positive electrode including a positive electrode active material layer; a negative electrode including a negative electrode active material layer comprising at least one of SiO, SnO and GeO; and a separator disposed between the negative electrode and the positive electrode. The negative electrode active material layer includes a metallic material capable of forming an alloy with lithium. The separator includes a porous layer comprising a ceramic material and a binder. The separator is formed to a thickness that is 7 to 20% of the thickness of the negative electrode active material layer. The binder makes up 5 to 20% of the total weight of the porous layer the negative electrode includes a negative current collector having a thickness that is from 5 to 10% of the thickness of the negative electrode active material layer.

>

According to another aspect of the present invention, provided is a lithium secondary battery that includes the electrode assembly.

In one preferred embodiment, the lithium secondary battery has a capacity of at least 3000mAh.

In one embodiment, the negative electrode active material layer may include carbon nanofibers that grown from a surface thereof. The carbon nanofibers may have lengths of from 1nm to 1mm, and diameters of from 1 to 40nm.

Additional aspects and/or advantages of the invention will be set forth in part in the description which follows and, in part, will be obvious from the description, or may be learned by practice of the invention.

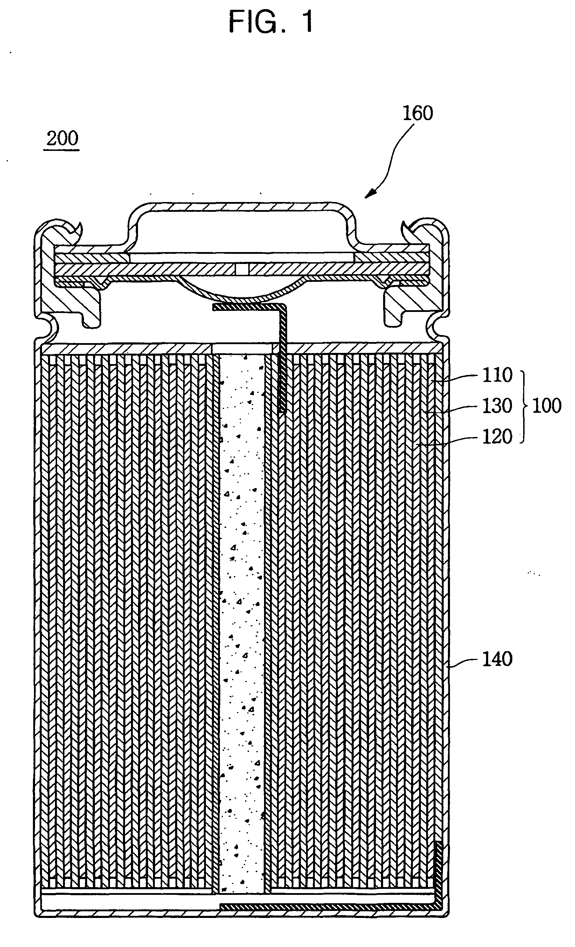

These and/or other aspects and advantages of the invention will become apparent and more readily appreciated from the following description of the exemplary embodiments, taken in conjunction with the accompanying drawings, of which: FIG. 1 illustrates a sectional view of a secondary battery, according to aspects of the present invention.

Reference will now be made in detail to the exemplary embodiments of the present invention, examples of which are illustrated in the accompanying drawings, wherein like reference numerals refer to the like elements throughout. The exemplary embodiments are described below, in order to explain the aspects of the present invention, by referring to the figures.

FIG 1 illustrates a secondary battery 200, according to aspects of the present invention. The secondary battery 200 includes an electrode assembly 100. The electrode assembly 100 includes a positive electrode 110, a negative electrode 120, and a separator 130 disposed therebetween.

The separator 130 includes a porous layer comprising a ceramic material and a binder. The separator 130 may be formed by applying a separator paste to one or both of the positive and negative electrodes110, 120. The paste is prepared by mixing the ceramic material, a solvent, and the binder. The separator 130 may serve as a film-type separator, such as conventional polyethylene (PE) or polypropylene (PP) separator.

The ceramic material may be at least one selected from the group consisting of silica (SiO₂), alumina (Al₂O₃), zirconium oxide (ZrO₂), and titanium oxide (TiO₂). The ceramic material may also be an insulating nitride, a hydroxide, or a ketone, of zirconium, aluminum, silicon, or titanium, or a mixture thereof. The nitrides are described as being insulating because some nitrides, such as titanium nitride (TiN), are conductive, and thus are not included in the ceramic materials.

The binder may be a synthetic rubber-based latex, or a cross-linked acrylic rubber. The synthetic rubber-based latex may include at least one selected from the group consisting of styrene butadiene rubber (SBR) latex, nitrile butadiene rubber (NBR) latex, methyl methacrylate butadiene rubber latex, chloroprene rubber latex, carboxyl-modified styrene butadiene rubber latex, and polyorganosiloxane-modified polymer latex. Such polymer latex may exist as aqueous dispersion, and solid polymer latex may be added at 0.1 to 20 parts by weight, with respect to 100 parts by weight of the separator 130. When the content of the binder is less than 0.1 part by weight, it cannot provide satisfactory adhesion to a current collector. When the binder is included at greater than 20 parts by weight, battery characteristics may be degraded.

The acrylic rubber may be formed by a cross-linking reaction between a polymer or copolymer of an acrylic main monomer and a cross-linkable co-monomer. The polymer or copolymer may be easily broken, due to having a weak binding structure, but when the cross-linkable monomer is added to the polymer or copolymer, a stronger network structure is formed. Such a network structure swells less in a solvent, as the degree of crosslinking increases. The acrylic rubber binder may have a three dimensional structure having 2 to 10 crosslinks, of 4 to 5 crosslinks, per 10,000 molecular weight units of a main chain molecule. Thus, the acrylic rubber may be resistant to swelling when soaked in an electrolyte.

The ceramic material is degraded at a temperature of 1000°C, or higher, and the acrylic rubber is degraded at a temperature of 250°C, or higher. Thus, the separator 130 may have a high thermal resistance and good temperature stability, so as to prevent an internal short circuit in the secondary battery 200.

The acrylic main monomer may be at least one selected from the group consisting of: an alkoxyalkyl acrylate, including methoxymethyl acrylate, methoxyethyl acrylate, ethoxyethyl acrylate, butoxyethyl acrylate, methoxyethoxyethyl acrylate, and dicyclopentenyloxyethyl acrylate; an alkenyl acrylate or an alkenyl methacrylate, including vinyl methacrylate, vinyl acrylate, allyl methacrylate, 1,1-dimethylpropenyl methacrylate, 1,1-dimethylpropenyl acrylate, 3,3-dimethylbutenyl methacrylate, and 3,3-dimethylbutenyl acrylate; an unsaturated dicarboxylic acid ester, including divinyl itaconate and divinyl maleate; a vinyl-containing ether, including vinyl 1,1-dimethylpropenyl ether and vinyl 3,3-dimethylbutenyl ether; 1-acryloyloxy-1-phenylethene; and methyl methacrylate.

The cross-linkable co-monomer may be at least one selected from the group consisting of an alkyl acrylate, including 2-ethylhexyl acrylate, methyl acrylate, ethyl acrylate, propyl acrylate, butyl acrylate, octyl acrylate and iso-octyl acrylate; an alkenyl chloroacetate, including vinyl chloroacetate and acryl chloroacetate; a glycidyl-containing ester or an ether including glycidyl acrylate, vinylglycidyl ether, and acryl glycidyl ether; an unsaturated carboxylic acid, including acrylic acid, methacrylic acid, and maleic acid; 2-chloroethyl vinyl ether; chloromethyl styrene; and acrylonitrile.

The binder may make up 5 to 20%, by weight, of the porous layer. The binder binds together the particles of the ceramic material and binds the separator 130 to an active material layer. Accordingly, when the binder makes up less than 5%, the flexibility, durability, and adhesion of the separator 130 may decrease. When the content of the binder is greater than 20%, the binder may reduce the porosity of the separator 130, thereby inhibiting the flow of lithium ions through the separator 130.

When carbon nanofibers grown from the surface of the active material layer (discussed below), the active material layer has a more uneven surface, so the ceramic layer should be made more flexible. Thus, the content of the binder may be 5%, or more.

The positive electrode 110 includes a positive electrode active material that can reversibly intercalate lithium ions, and a positive current collector, to which the positive electrode active material is applied. The positive electrode active material may include lithium oxide and cobalt or manganese. However, the present invention is not so limited.

The positive electrode active material may be represented by the following compounds 1-13

LiₓMn_{1-y}M_{y}A₂ (1)

LiₓMn_{1-y}M_{y}O_{2-z}X_{z} (2)

LiₓMn₂O_{4-z}X_{z} (3)

LiₓMn_{2-y}M_{y}M'_{z}A₄ (4)

LiₓCo_{1-y}M_{y}A₂ (5)

LiₓCo_{1-y}M_{y}O_{2-z}X_{z} (6)

LiₓNi_{1-y}M_{y}A₂ (7)

LiₓNi_{1-y}M_{y}O_{2-z}X_{z} (8)

LiₓNi_{1-y}Co_{y}O_{2-z}X_{z} (9)

LiₓNi_{1-y-z}Co_{y}M_{z}A_{α} (10)

LiₓNi_{1-y-z}Co_{y}M_{z}O_{2-α}X_{α} (11)

LiₓNi_{1-y-z}Mn_{y}M_{z}A_{α} (12)

LiₓNi_{1-y-z}Mn_{y}M_{z}O_{2-α}X_{α} (13)

In compounds 1-13, 0.9≤x≤1.1, 0≤y≤0.5, 0≤z≤0.5, and 0≤α≤2. M and M' may be independently selected from the group consisting of Mg, Al, Co, K, Na, Ca, Si, Ti, Sn, V, Ge, Ga, B, As, Zr, Mn, Cr, Fe, Sr, V, and a rare-earth element. A is selected from the group consisting of O, F, S, and P, and X is selected from the group consisting of F, S, and P.

The negative electrode 120 includes a negative electrode active material that can reversibly intercalate lithium ions and a negative current collector, to which the negative electrode active material is applied. The negative electrode active material is a metallic material that can be alloyed with lithium.

The metallic material can include one or more metals capable of alloying with lithium and/or an oxide thereof. For example, the metallic material can include Sn, Si, Ge, Cr, Al, Mn, Ni, Zn, Co, In, Cd, Bi, Pb, and/or V. The metal oxide may comprise SnO₂, SnO, SiO₂, SiO, GeO, CrO₂, Cr₂O₃, Al₂O₃, Al(OH)₃, MnO₂, Mn₂O₃, NiO₂, NiO, ZnO, CoO, InO₃, CdO, Bi₂O₃, PbO, and/or V₂O₅. The metal oxides can be reduced forms of the metallic materials. The Si, Sn, Ge SiO, SnO, and GeO are particularly applicable, due to having high capacities, low production costs, and good processing characteristics.

The negative electrode active material has a high capacity and energy density, and reversibly intercalates more lithium ions than a carbonaceous material. Therefore, the negative electrode active material has a higher capacity and energy density than a carbonaceous material.

The negative electrode 120 may further include carbon nanofibers, which can be grown from the surface of the negative electrode active material. The carbon nanofibers may be obtained by depositing a catalyst, which promotes the growth of the carbon nanofibers, on the surface of the negative electrode active material, and then growing the carbon nanofibers therefrom. The catalyst may be at least one transition metal selected from the group consisting of Mn, Fe, Co, Ni, Cu, and Mo.

To deposit the catalyst on the surface of the negative electrode active material, a soaking method may be used. For example, a catalyst precursor (e.g., an oxide, a carbide, a nitrate, etc. of the catalyst) is dissolved in a solvent, to prepare a catalyst solution. The catalyst precursor may include nickel nitrate, cobalt nitrate, ferric nitrate, copper nitrate, manganese nitrate, and 6-ammodium 7-molybdate. The solvent may include water, an organic solvent, or a mixture thereof. The organic solvent may be ethanol, isopropyl alcohol, toluene, benzene, hexane, or tetrahydrofuran.

Subsequently, the negative electrode active material is soaked in the catalyst solution, and then the solvent is removed therefrom, by a thermal treatment, if necessary. The catalyst may be uniformly dispersed, at a high concentration, on the surface of the negative electrode active material.

The catalyst may be loaded on the negative electrode active material at from 0.01 to 10 parts by weight, or at from 1 to 3 parts by weight, per 100 parts by weight of the negative electrode active material. Thus, when using the catalyst precursor, the catalyst may be adjusted to be in the above range.

When the catalyst is present at less than 0.01 parts by weight, it takes a long time to grow the carbon nanofibers, and thus production efficiency decreases. Whereas, when the catalyst is present at greater than 10 parts by weight, the carbon nanofibers may be grown unevenly and/or too thickly, due to the coagulation of the catalytic particles. Thus, the conductivity of the electrode may be decreased.

The diameters of the catalytic particles preferably ranges from 1 to 1000nm, or more specifically, from 10 to 100nm. When the diameters are less than 1nm, the generation of the catalytic particles is more difficult, and when the diameters are larger than 1000nm, the catalytic particles lack uniformity. Thus, the carbon nanofibers are difficult to grow.

The following method may be used to grow the carbon nanofibers. First, the negative electrode active material having the catalyst coating is heated at from 100 to 1000°C, in an inert gas atmosphere. Then, a mixture of a carbon containing gas and a hydride gas are introduced to the surface of the negative electrode active material. The carbon containing gas may be methane, ethane, ethylene, butane, or carbon monoxide, for example.

The catalyst is reduced by the mixture, thereby growing the carbon nanofibers on the surface of the metallic material. The obtained negative electrode active material may be thermally treated at a temperature of 400 to 1600°C, in an inert gas atmosphere, thereby preventing an irreversible reaction from occurring between a non-aqueous electrolyte and the carbon nanofibers, during a first cycle of charging/discharging, and thus decreasing the efficiency of the charging/discharging.

The carbon nanofibers may have lengths of 1nm to 1mm, and diameters of from 1 to 40nm. When the lengths and diameters are less than 1nm, the capacity of the secondary battery 200 may not be significantly improved. When the lengths and diameters are greater than 1mm and 40nm, respectively, a rolling process is not properly conducted, during the formation of electrode plates, and a life span of the secondary battery 200 is degraded. The carbon nanofibers may be tube-shaped, accordion-shaped, plate-shaped, or herringbone-shaped.

The negative electrode active material may further include at least one selected from the group consisting of synthetic graphite, natural graphite, graphitized carbon fiber, graphitized mezocarbon microbeads, and amorphous carbon, all of which can reversibly intercalate lithium.

The positive and negative electrodes 110, 120 may further include a conductive material for increasing the electrical conductivity thereof. The conductive material may be at least one selected from the group consisting of a graphitic conductive material, a carbon black-based conductive material, and a metallic material. The graphitic conductive material may be synthetic graphite or natural graphite. The carbon black-based conductive material may be acetylene black, ketjen black, denka black, thermal black, and channel black. The metallic material may be tin, tin oxide, tin phosphate (SnPO₄), titanium oxide, potassium titanate, or a perovskite material, such as LaSrCoO₃, or LaSrMnO₃.

The conductive material may be included at from 0.1 to 10% of the weight of the positive electrode active material. When the content is less than 0.1%, electrochemical characteristics may deteriorate, and when the content is greater than 10%, the energy density per unit weight may decrease.

The electrode active materials can include a binder that serves to plasticize the active materials, to bind the electrode active materials to a current collector, and to control the expansion and contraction of the electrode active materials. Examples of the binder include polyvinylidene fluoride, a copolymer of polyhexafluoropropylene and polyvinylidene fluoride (P(VdF/HFP)), poly(vinylacetate), polyvinylalcohol, polyethylene oxide, polyvinyl pyrolidone, alkylated polyethylene oxide, polyvinylether, poly(methylmethacrylate), poly(ethylacrylate), polytetrafluoroethylene, polyvinylchloride, polyacrylonitrile, polyvinylpyridine, styrene-butadiene rubber, and acrylonitrile-butadiene rubber. The content of the binder may be from 0.1 to 30% of the weight of the associated electrode active material, and more specifically from 1 to 10%. When the content is too small, the electrode active material may not be sufficiently adhered to the associated current collector. When the content is too great, the capacity of the electrode active material may be reduced.

The electrode active material, binder, and conductive material may be dispersed in a non-aqueous or an aqueous solvent, before being applied to a current collector. The non-aqueous solvent may be, for example, N-methyl-2-pyrolidone (NMP), dimethylformamide, dimethylacetamide, N-N-dimethylaminopropylamine, ethylene oxide, tetrahydrofuran, or a combination thereof.

When the binder of the negative electrode active material is an aqueous material, such as styrene-butadiene rubber, the binder for the separator 130 may be organic. When the binder of the negative electrode active material is an organic material, such as polyvinylidene fluoride, the binder for the separator 130 may be aqueous. The negative electrode active material and the separator 130 should be formed with different types of solvents and binders, such that the solvent of one does not dissolve the binder of the other.

The solvent for the separator paste may be formed of NMP and cyclohexanone, in a weight ratio ranging from 0:100 to 50:50, and more specifically from 30:70, when the separator paste includes an organic binder. Alternatively, NMP may be replaced with isopropyl alcohol, toluene, or xylene. When the binder for the negative electrode active material is organic, the binder of the separator 130 may be aqueous, and the solvent thereof may be water.

The positive current collector may be formed of aluminum or an aluminum alloy, and the negative current collector may be formed of copper or a copper alloy. The positive and negative current collectors may be formed in a foil, film, or sheet and may be punched, porous, or foamy. The negative current collector is formed to a thickness that is 5 to 10% of the thickness of the negative active material.

The current collectors support the active material layers and collect electrons, but do not contribute to the capacity of the secondary battery 200. Accordingly, the current collectors may be relatively thin, to give the secondary battery 200 a higher energy density and capacity. However, when the current collectors are too thin, they may be damaged during processing.

That is, when the negative current collector has a thickness of less than 5% of the thickness of the active material layer, the negative current collector may be broken during the application of the active material. When the negative current collector has a thickness of greater than 10% of the thickness of the active material layer, the secondary battery 200 may not have a desired capacity.

The separator 130 may be adhered to at least one surface of at least one of the positive and negative electrodes 110, 120 of the secondary battery 200. To be specific, the separator 130 may be formed by applying the separator paste to the negative electrode 120, and removing the solvent from the separator paste, by a baking process.

Alternatively, the separator 130 may be formed by preparing a separator solution, in which the ceramic material particles are uniformly dispersed in a mixture of the binder and the solvent, and dipping the electrodes 110, 120 into the separator solution. Alternatively, the separator 130 may be formed by spraying the separator solution onto the electrodes 110, 120. The separator 130 may serve as a film-type separator formed of a polyolefin-based resin layer, such as polyethylene (PE) or polypropylene (PP) layer, or an additional separator together with the conventional film-type separator formed of the polyethylene (PE) or polypropylene (PP).

The thickness of the separator 130 is adjusted in consideration of ion conductance and energy density, and thus, may be from 1 to 40µm, or may be from 5 to 20µm. When the thickness of the separator 130 is less than 1µm, the separator's 130 strength may decrease, and when the thickness of the separator 130 is greater than 40µm, the energy density of the secondary battery 200 may decrease. The thickness of the separator 130 is from 7 to 20% of the thickness of the negative active material layer.

A ceramic material is heat-resistant, so as to prevent thermal diffusion from damaging the separator 130 and causing an internal short circuit in the secondary battery 200. As the capacity of the secondary battery 200 becomes higher, the amount of heat produced therein becomes larger, during charging and discharging. Therefore, the thickness of the separator 130 is generally increased as the capacity of the secondary battery 200 is increased. However, the thickness of the separator 130 should not be excessively increased, so as not to unnecessarily reduce the capacity of the secondary battery 200.

That is, when the thickness of the separator 130 is less than 7% of the negative active material layer, the secondary battery 200 may burn or explode during an internal short circuit. When the thickness is greater than 20%, the capacity of the secondary battery 200 may be reduced.

The electrode assembly 100 may be formed by stacking the positive and negative electrodes 110, 120 with the separator 130 therebetween. The resultant structure may be wound into a jellyroll-type shape.

Unlike the separator 130, a conventional film-type separator shrinks and/or melts at high temperatures. When a conventional film-type separator is damaged by heat from overcharging/over discharging, a short circuit is formed between the electrodes thereof. Heat from the short circuit can result in additional damage to the conventional film-type separator, which can enlarge the short circuit. As the separator 130 does not shrink or melt, even if a short circuit is formed, the short circuit will not become larger, thereby continuously consuming current, to maintain a constant voltage of 5 to 6V and a temperature of 100°C or lower, and thus, increasing stability.

The secondary battery 200 includes an electrolyte. The electrolyte includes a non-aqueous organic solvent, which may be a carbonate, an ester, an ether, and/or a ketone. The carbonate may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC) or butylene carbonate (BC). The ester may be butyrolactone (BL), decanolide, balerolactone, mevalonolactone, caprolactone, n-methyl acetate, n-ethyl acetate or n-propyl acetate. The ether may be dibutyl ether, and the ketone may be polymethylvinyl ketone. However, the present invention is not limited thereto.

When the non-aqueous organic solvent is a carbonate-based organic solvent, it may be formed by mixing cyclic and chain carbonates. The cyclic and chain carbonates may be mixed in a volume ratio ranging from 1:1 to 1:9, or in particular, from 1:1.5 to 1:4.

The electrolyte may further include an aromatic hydrocarbon-based organic solvent and the carbonate-based solvent. The aromatic hydrocarbon-based organic solvent may be an aromatic hydrocarbon-based compound. Examples of the aromatic hydrocarbon-based organic solvent include benzene, fluorobenzene, chlorobenzene, nitrobenzene, toluene, fluorotoluene, trifluorotoluene, and xylene. The carbonate-based solvent and the aromatic hydrocarbon-based solvent may be mixed in a volume ratio ranging from 1:1 to 30:1.

The electrolyte includes a lithium salt as a source of lithium ions. Examples of the lithium salt include at least one selected from the group consisting of LiPF₆, LiBF₄, LiSbF₆, LiAsF₆, LiClO₄, LiCF₃SO₃, LiN(CF₃SO₂)₂, LiN(C₂F₅SO₂)₂, LiAlO₄, LiAlCl₄,
LiN(C_{X}F_{2X+1}SO₂)(C_{y}F_{2X+1}SO₂) (x and y are natural numbers), LiSO₃CF₃, and a mixture thereof.

The concentration of the lithium salt may be in a range from 0.6 to 2.0M, and in particular from 0.7 to 1.6M. When the concentration of the lithium salt is less than 0.6M, the conductivity of the electrolyte decreases, thereby lowering the performance of the electrolyte. When the concentration of the lithium salt is greater than 2.0M, the viscosity of the electrolyte increases, thereby lowering a migration rate of the lithium ions.

The lithium secondary battery 200 includes the electrode assembly 100, which is disposed in a container, such as a can 140 or a pouch. The electrolyte is injected into the can 140 to cover the electrode assembly 100. The can 140 can be sealed with a cap assembly 160. The can 140 can be, for example, cylindrical, prismatic, or the like.

Hereinafter, examples according to aspects of the present invention, and comparative examples will be described. However, it will be understood that the present invention is not limited thereto.

### [Example 1]

LiCoO₂, polyvinylidene fluoride (PVDF), and carbon were mixed at a weight ratio of 92:4:4, in N-methyl-2-pyrolidone, to prepare positive electrode slurry. The positive electrode slurry was coated onto aluminum foil, dried, and rolled, to form a positive electrode. SiO, styrene-butadiene rubber, and carboxymethyl cellulose, at a weight ratio of 96:2:2, were mixed in water, to prepare a negative electrode slurry. The negative electrode slurry was coated onto copper foil, dried, and rolled, to form a negative electrode.

Alumina (Al2O₃) was mixed with an acrylic rubber, in a mixed solvent of N-methyl-2-pyrollidone and cyclohexanone, to make a separator paste. The separator paste was applied to the negative electrode and then dried. The positive and negative electrodes were then wound, compressed, and inserted into a cylindrical can. An electrolyte was injected into the can, to form a secondary battery.

The negative electrode active material was coated to a thickness of 150µm, and the separator was coated to a thickness of 10.5µm (7% the thickness of the negative electrode active material). The acrylic rubber made up 5% of the total weight of the separator.

### [Example 2]

The process of Example 1 was repeated, except that the separator was formed to a thickness of 15µm, which was 10% of the thickness of the negative electrode active material layer, and the binder was added at a concentration of 10 wt%.

### [Example 3]

The process of Example 1 was repeated, except that the separator was designed to a thickness of 22.5µm, which was 15% of that of the negative electrode active material layer, and the binder was added at a concentration of 15 wt%.

### [Example 4]

The process of Example 1 was repeated, except that the separator was designed to a thickness of 30µm, which was 20% of that of the negative electrode active material layer, and the binder was added at a concentration of 20 wt%.

### [Comparative Example 1]

The process of Example 1 was repeated, except that the separator was designed to a thickness of 4.5µm, which was 3% of that of the negative electrode active material layer, and the binder was added at a concentration of 2 wt%.

### [Comparative Example 2]

The process of Example 1 was repeated, except that the separator was designed to a thickness of 7.5µm, which was 5% of that of the negative electrode active material layer, and the binder was added at a concentration of 3 wt%.

### [Comparative Example 3]

The process of Example 1 was repeated, except that the separator was designed to a thickness of 31.5µm, which was 21% of that of the negative electrode active material layer, and the binder was added at a concentration of 21 wt%.

### [Comparative Example 4]

The process of Example 1 was repeated, except that the separator was designed to a thickness of 36µm, which was 24% of that of the negative electrode active material layer, and the binder was added at a concentration of 24 wt%.

The secondary batteries of Examples 1 to 4, and Comparative Examples 1 to 4 were fully charged and then the electrode assemblies were unwound. Metal particles were applied to the negative electrode plates. Then the electrode assemblies were rewound. After that, the battery was rolled 10 times, while applying a pressure of 1 to 3kgf. If the battery did not emit smoke or heat, it was referred to as "OK," and if the battery emitted smoke or heat, it was referred to as "NG."

The initial capacities of the secondary batteries of Examples 1 to 4 and Comparative Examples 1 to 4 were determined by measuring the capacities per unit volume. To exhibit a capacity of at least 3000mAh, the capacity per unit volume must be at least 180mAh/cc. if the capacity per unit volume of a secondary battery was less than 180mAh/cc, it was referred to as "NG," and if it was at least 180mAh/cc, it was referred to as "OK."

The measurements are listed in the following Table 1.

**[Table 1]**

| | Thickness of Active Material Layer (µm) | Thickness of Separator (µm) | Thickness Ratio of Sepatator (%) | Content of Binder (wt%) | Internal Short Circuit Characteristic | Initial Capacity | |
|---|---|---|---|---|---|---|---|
| | | | | | | Capacity (mAh/cc) | Characteristic |
| Example 1 | 150 | 10.5 | 7 | 5 | OK | 200 | OK |
| Example 2 | 150 | 15 | 10 | 10 | OK | 195 | OK |
| Example 3 | 150 | 22.5 | 15 | 15 | OK | 190 | OK |
| Example 4 | 150 | 30 | 20 | 20 | OK | 185 | OK |
| Comp. Example 1 | 150 | 4.5 | 3 | 2 | NG | 210 | OK |
| Comp. Example 2 | 150 | 7.5 | 5 | 3 | NG | 205 | OK |
| Comp. Example 3 | 150 | 31.5 | 21 | 21 | OK | 170 | NG |
| Comp. Example 4 | 150 | 36 | 24 | 24 | OK | 165 | NG |

Referring to Table 1, in Examples 1 to 4, in which the thickness of the ceramic layer was between 7% and 20%, a desired capacity was reached, and an excessive amount of heat was not produced during the internal short circuit tests. In addition, the secondary batteries had the desired high capacity.

In Comparative Examples 1 and 2, in which the thickness of the ceramic layer was less than 7%, heat was produced during the internal short circuit tests. In Comparative Examples 3 and 4, in which the thickness of the ceramic layer was greater than 20%, an excessive amount of heat was not produced during the internal short circuit. However, the secondary batteries had poor initial capacity characteristics.

In Comparative Examples 1 and 2, the ceramic layers lacked adhesion and had decreased scratch resistance. Thus, the secondary batteries had poor internal short circuit characteristics. In Comparative Examples 3 and 4, the binders blocked pores in the separators and thereby impeded the migration of lithium ions, resulting in the lowered capacities

Consequently, according to aspects of the present invention, the thickness of the separator may be 7 to 20% of the thickness of the negative electrode active material, and the binder may be included at 5 to 20% of the weight of the porous layer.

To compare relationships of the thicknesses or the negative electrode active material layers and the negative current collectors, the following experiments were conducted.

### [Example 5]

The process of Example 1 was repeated, except that the negative electrode active material layer had a thickness of 150µm, and the copper foil had a thickness of 7.5µm, which was 5% of the thickness of the negative electrode active material layer.

### [Example 6]

The process of Example 1 was repeated, except that the negative current collector was formed to a thickness of 15µm, which was 10% of that of the negative electrode active material.

### [Example 7]

The process of Example 1 was repeated, except that the negative current collector was formed to a thickness of 12µm, which was 8% of that of the negative electrode active material.

### [Comparative Example 5]

The process of Example 1 was repeated, except that the negative current collector was formed to a thickness of 7µm, which was 4.67% of that of the negative electrode active material.

### [Comparative Example 6]

The process of Example 1 was repeated, except that the negative current collector was formed to a thickness of 20µm, which was 13.3% of that of the negative electrode active material.

Initial capacities of the secondary batteries in Examples 5 to 7 and Comparative Examples 5 and 6 were determined by measuring their capacities per unit volume.

To exhibit a capacity of at least 3000mAh, the capacity per unit volume must be at least 180mAh/cc. If the capacity per unit volume was less than 180mAh/cc, it was referred to as "NG," and if it was greater than 180mAh/cc, it was referred to as "OK." If the negative current collector of one of the secondary batteries was broken, it was referred to as "NG," and if it was not broken, it was referred to as "OK." The results were listed in Table 2.

### [Table 2]

**[Table 2]**

| | Thickness of Active Material Layer (µm) | Thickness of Current Collector (µm) | Thickness Ratio of Current Collector(%) | Breakage of Current Collector | Initial Capacity | |
|---|---|---|---|---|---|---|
| | | | | | Capacity(mAh/cc) | Characteristic |
| Example 5 | 150 | 7.5 | 5 | OK | 210 | OK |
| Example 6 | 150 | 15 | 10 | OK | 185 | OK |
| Example 7 | 150 | 12 | 8 | OK | 200 | OK |
| Comp. Example 5 | 150 | 7 | 4.67 | NG | 220 | OK |
| Comp. Example 6 | 150 | 20 | 13.3 | OK | 170 | NG |

In Examples 5 to 7, in which the thickness of the current collector was 5 to 10% of the thickness of the active material layer, a desired capacity was obtained, and the copper current collectors were not broken.

In Comparative Example 5, in which the thickness of the current collector was less than 5% of that of the active material layer, the tensile strength of the current collector was weak, so the current collector was broken during coating of the active material. In Comparative Example 6, in which the thickness of the current collector was greater than 10% of that of the active material layer, the battery did not have the desired capacity, which means that the initial capacity characteristics were not acceptable.

Consequently, according to aspects of the present invention, the thickness of the negative current collector may be 5 to 10% of the thickness of the negative electrode active material layer.

Next, metallic negative electrode active materials including carbon nanofibers, were investigated.

### [Example 8]

The process of Example 1 was repeated, except that carbon nanofibers were grown from the surface of the negative electrode active material layer, using Ni as a catalyst. The carbon nanofibers had lengths of from 1nm to 1mm, and diameters of from 1 to 40nm.

### [Example 9]

The process of Example 8 was repeated, except that in the negative electrode active material, and the SiO was substituted with SnO.

### [Example 10]

The process of Example 8 was repeated, except that in the negative electrode active material, and the SiO was substituted with GeO.

### [Comparative Example 7]

The process of Example 8 was repeated, except that the carbon nanofibers were formed to have lengths of less than 1nm and diameters of less than 1nm. In addition, the separator was not formed.

### [Comparative Example 8]

The process of Example 9 was repeated, except that the carbon nanofibers were formed to have lengths of less than 1nm and diameters of less than 1nm. In addition, the separator not formed.

### [Comparative Example 9]

The process of Example 10 was repeated, except that the carbon nanofibers were formed to have lengths of less than 1nm and diameters of less than 1nm. In addition, the separator was not formed.

### [Comparative Example 10]

The process of Example 8 was repeated, except that the carbon nanofibers were formed to have lengths greater than 1mm and diameters greater than 40nm. In addition, the separator was not formed.

### [Comparative Example 11]

The process of Example 9 was repeated, except that the carbon nanofibers were formed to have lengths greater than 1mm and diameters greater than 40nm. In addition, the separator was not formed.

### [Comparative Example 12]

The process of Example 10 was repeated, except that the carbon nanofibers were formed to have lengths greater than 1mm and diameters greater than 40nm. In addition, the separator was not formed.

### [Comparative Example 13]

The process of Example 8 was repeated, except that the separator was not formed.

### [Comparative Example 14]

The process of Example 9 was repeated, except that the separator was not formed.

### [Comparative Example 15]

The process of Example 10 was repeated, except that the separator was not formed.

### [Comparative Example 16]

The process of Example 8 was repeated, except that the carbon nanofibers were formed to have lengths greater than 1mm and diameters greater than 40nm.

### [Comparative Example 17]

The process of Example 9 was repeated, except that the carbon nanofibers were formed to have lengths of greater than 1mm, and diameters of greater than 40nm.

### [Comparative Example 18]

The process of Example 10 was repeated, except that the carbon nanofibers were formed to have lengths greater than 1mm and diameters greater than 40nm.

The rolling press experiment was performed on the secondary batteries according to Examples 8 to 10 and Comparative Examples 7 to 18. If a secondary battery did not emit smoke or excessive heat, it was referred to as "OK," and if it emitted smoke or excessive heat, it was referred to as "NG."

Further, capacity maintenance rate percentages of the secondary batteries were detected, by comparing discharge capacities after 300 cycles to those after the first cycle. If the capacity maintenance rate was lower than 75%, it was referred to as "NG," and if the capacity maintenance rate was higher than 75%, it was referred to as "OK." In addition, when the carbon nanofibers had lengths of 1nm to 1mm, and diameters of 1 to 40nm, they were referred to as "OK", and in other cases they were referred to as "NG",

The results were listed in Table 3.

**[Table 3]**

| | Main Particle | Diameter and Length of Carbon Nanofibers | Separator Existence | Internal Short Circuit Characteristic | 300 Cycles | |
|---|---|---|---|---|---|---|
| | | | | | Characteristic | Capacity Maintenance Rate(%) |
| Example 8 | SiO | OK | Yes | OK | OK | 79 |
| Example 9 | SnO | OK | Yes | OK | OK | 82 |
| Example 10 | GeO | OK | Yes | OK | OK | 85 |
| Comp. Example 7 | SiO | NG | No | NG | NG | 72 |
| Comp. Example 8 | SnO | NG | No | NG | NG | 65 |
| Comp. Example 9 | GeO | NG | No | NG | NG | 67 |
| Comp. Example 10 | SiO | NG | No | NG | NG | 55 |
| Comp. Example 11 | SnO | NG | No | NG | NG | 62 |
| Comp. Example 12 | GeO | NG | No | NG | NG | 59 |
| Comp. Example 13 | SiO | OK | No | NG | OK | 78 |
| Comp. Example 14 | SnO | OK | No | NG | OK | 80 |
| Comp. Example 15 | GeO | OK | No | NG | OK | 85 |
| Comp. Example 16 | SiO | NG | Yes | OK | NG | 65 |
| Comp. Example 17 | SnO | NG | Yes | OK | NG | 61 |
| Comp. Example 18 | GeO | NG | Yes | OK | NG | 57 |

Referring to Table 3, in Examples 8 to 10 the secondary batteries did not emit smoke or excessive heat, during the rolling press experiment. Thus, the secondary batteries exhibited good capacity maintenance characteristics after 300 cycles.

Comparative Examples 7 to 12 failed the rolling press experiment, since the ceramic separator was not present. The capacity maintenance characteristics after 300 cycles were "NG", since the diameters and lengths of the carbon nanofibers were outside the specified range. Also, in Comparative Examples 13 to 15, the capacity maintenance characteristics after 300 cycles were "OK", but the results of the rolling press experiment were "NG," since the ceramic separator was not present. Also, in Comparative Examples 16 to 18, the results of the rolling press experiment were "OK", but the capacity maintenance characteristics after 300 cycles were not satisfied, since the diameters and lengths of the carbon nanofibers were too large.

Consequently, according to aspects of the present invention, is was shown that using a metallic negative electrode active materiall, including carbon nanofibers and a separator including a ceramic material, produced positive results when the carbon nanofibers had lengths of from 1nm to 1mm, and diameters of from 1 to 40nm.

According to aspects of the present invention, the thickness of a separator including a ceramic material may be set according to the thickness of a metallic negative electrode active material layer. Thus, a secondary battery having excellent internal short circuit characteristics and a high capacity, may be obtained.

According to aspects of the present invention, the content of the binder for the separator was set to produce a secondary battery having excellent internal short circuit characteristics, and a high capacity.

Although a few exemplary embodiments of the present invention have been shown and described, it would be appreciated by those skilled in the art that changes may be made in these exemplary embodiments, without departing from the principles of the invention, the scope of which is defined in the claims.

## Claims

1. An electrode assembly, composing:
a positive electrode comprising a positive electrode active material;
a negative electrode comprising a negative electrode active material comprising at least one selected from the group consisting of SiO, SnO, and GeO; and
a separator disposed between the negative electrode and the positive electrode, the separator including a porous layer comprising a ceramic material and a binder,
wherein the thickness of the porous layer is 7 to 20% of the thickness of the negative electrode active material, and the binder forms 5 to 20% of the total weight of the porous layer; and wherein the negative electrode further comprises a negative current collector having a thickness that is 5 to 10% of the thickness of the negative electrode active material.

2. The electrode assembly according to any preceding claim, wherein the ceramic material comprises at least one selected from the group consisting of silica (SiO₂), alumina (Al₂O₃), zirconium oxide (ZrO₂), and titanium oxide (TiO₂).

3. The electrode assembly according to any preceding claim, wherein the binder comprises a synthetic rubber-based latex or a crosslinked acrylic rubber.

4. The electrode assembly according to any preceding claim, further comprising carbon nanofibers disposed on the surface of the negative electrode active material.

5. The electrode assembly according to claim 4, wherein the carbon nanofibers have lengths of from 1nm to 1mm, and diameters of from 1 to 40nm.

6. A lithium secondary battery comprising an electrode assembly according to any of claims 1 to 5.

7. The lithium secondary battery according to claim 6, wherein the electrolyte comprises a non-aqueous organic solvent and a lithium salt.

8. The lithium secondary battery according to claim 6 or claim 7, wherein the lithium secondary battery has a capacity of at least 3000mAh.

9. The electrode assembly according to claim 4 or claim 5 or the lithium secondary battery comprising the electrode assembly according to claim 4 or claim 5, wherein the carbon nanofibers are grown from a catalyst disposed on the surface of the negative electrode active material.

## Patentansprüche

1. Elektrodenanordnung, umfassend:
eine positive Elektrode, die ein positives aktives Elektrodenmaterial umfasst;
eine negative Elektrode, die ein negatives aktives Elektrodenmaterial umfasst,
welches mindestens ein Material umfasst, das aus der aus SiO, SnO, und GeO bestehenden Gruppe ausgewählt ist; und
einen Separator, der zwischen der negativen Elektrode und der positiven Elektrode angeordnet ist, wobei der Separator eine poröse Schicht enthält, die ein keramisches Material und einen Binder umfasst, wobei die Dicke der porösen Schicht 7 bis 20 % der Dicke des negativen aktiven Elektrodenmaterials beträgt und der Binder 5 bis 20 % des Gesamtgewichts der porösen Schicht ausmacht; und wobei die negative Elektrode ferner einen negativen Stromabnehmer umfasst, dessen Dicke 5 bis 10 % der Dicke des negativen aktiven Elektrodenmaterials beträgt.

2. Elektrodenanordnung nach einem der vorhergehenden Ansprüche, wobei das keramische Material mindestens ein Material aus der Gruppe umfasst, die aus Siliziumdioxid (SiO₂), Aluminiumoxid (Al₂O₃), Zirkoniumdioxid (ZrO₂) und Titandioxid (TiO₂) besteht.

3. Elektrodenanordnung nach einem der vorhergehenden Ansprüche, wobei der Binder ein Latexmaterial auf Synthesekautschukbasis oder einen vernetzten Acrylkautschuk umfasst.

4. Elektrodenanordnung nach einem der vorhergehenden Ansprüche, ferner umfassend Kohlenstoffnanofasern, die auf der Oberfläche des negativen aktiven Elektrodenmaterials angeordnet sind.

5. Elektrodenanordnung nach Anspruch 4, wobei die Kohlenstoffnanofasern eine Länge von 1 nm bis 1 mm und einen Durchmesser von 1 bis 40 nm aufweisen.

6. Lithium-Sekundärbatterie, umfassend eine Elektrodenanordnung nach einem der Ansprüche 1 bis 5.

7. Lithium-Sekundärbatterie nach Anspruch 6, wobei der Elektrolyt ein nichtwässriges organisches Lösungsmittel und ein Lithiumsalz umfasst.

8. Lithium-Sekundärbatterie nach Anspruch 6 oder Anspruch 7, wobei die Lithium-Sekundärbatterie eine Kapazität von mindestens 3000 mAh aufweist.

9. Elektrodenanordnung nach Anspruch 4 oder Anspruch 5 oder Lithium-Sekundärbatterie, die eine Elektrodenanordnung nach Anspruch 4 oder Anspruch 5 umfasst, wobei die Kohlenstoffnanofasern auf einem Katalysator wachsen, der auf der Oberfläche des negativen aktiven Elektrodenmaterials angeordnet ist.

## Revendications

1. Assemblage d'électrodes comprenant :
une électrode positive comprenant un matériau actif d'électrode positive ;
une électrode négative comprenant un matériau actif d'électrode négative comprenant au moins un élément choisi dans le groupe constitué par SiO, SnO et GeO ; et
un séparateur placé entre l'électrode négative et l'électrode positive, le séparateur comprenant une couche poreuse comprenant un matériau céramique et un liant, dans lequel l'épaisseur de la couche poreuse est de 7 à 20 % de l'épaisseur du matériau actif d'électrode négative, et le liant forme de 5 à 20 % du poids total de la couche poreuse ; et dans lequel l'électrode négative comprend en outre un collecteur de courant négatif ayant une épaisseur de 5 à 10 % de l'épaisseur du matériau actif d'électrode négative.

2. Assemblage d'électrode selon l'une quelconque des revendications précédentes, dans lequel le matériau céramique comprend au moins un élément choisi dans le groupe constitué par la silice (SiO₂), l'alumine (Al₂O₃), l'oxyde de zirconium (ZrO₂) et l'oxyde de titane (TiO₂).

3. Assemblage d'électrode selon l'une quelconque des revendications précédentes, dans lequel le liant comprend un latex à base de caoutchouc synthétique ou un caoutchouc acrylique réticulé.

4. Assemblage d'électrode selon l'une quelconque des revendications précédentes, comprenant en outre des nanofibres de carbone placées sur la surface du matériau actif d'électrode négative.

5. Assemblage d'électrode selon la revendication 4, dans lequel les nanofibres de carbone ont des longueurs de 1 nm à 1 mm et des diamètres de 1 à 40 nm.

6. Batterie secondaire au lithium comprenant un assemblage d'électrodes selon l'une quelconque des revendications 1 à 5.

7. Batterie secondaire au lithium selon la revendication 6, dans laquelle l'électrolyte comprend un solvant organique non aqueux et un sel de lithium.

8. Batterie secondaire au lithium selon la revendication 6 ou la revendication 7, dans laquelle la batterie secondaire au lithium a une capacité d'au moins 3000 mAh.

9. Assemblage d'électrodes selon la revendication 4 ou la revendication 5 ou batterie secondaire au lithium comprenant l'assemblage d'électrode selon la revendication 4 ou la revendication 5, dans lequel les nanofibres de carbone sont développées à partir d'un catalyseur placé sur la surface du matériau actif d'électrode négative.
